# EUROPEAN PATENT APPLICATION

(11) **EP 4 560 270 A1**
(43) Date of publication of application: **28.05.2025**
(21) Application number: 23211823.2
(22) Date of filing: 23.11.2023
(51) Int. Cl.: G01D 5/244, G01D 5/347

(54) **SCALE SUPPORT FOR AN ENCODER SCALE AND LINEAR ENCODER COMPRISING SUCH SCALE SUPPORT**

(71) Applicant: ETEL S.A., 2112 Môtiers (CH)
(72) Inventor: Tommasi, Hervé, 1424 Champagne (CH); Tamigniaux, Philippe, 25500 Morteau (FR)
(74) Representative: P&TS SA (AG, Ltd.)

(57) **Abstract**

The invention relates to a scale support (10) for an encoder scale (30) of a linear electric motor (40). The scale support (10) comprises a scale receiving part (12) having an encoder scale receiving side (14) for receiving an encoder scale (30), and at least two stands (20) connected to the receiving part (12). Each stand (20) comprises a fixation pad (22) arranged to be fixed to a fixation region (44) of a stationary part (42) of the electric motor (40). The fixation pad (44) is subjected to a displacement induced by a displacement of said fixation region (44) when the scale support (10) is mounted on the stationary part (42) and the electric motor is operating. Each stand (20) further comprises a decoupling member (26a, 26b) for at least a partial mechanical decoupling between the fixation pad (22) and the encoder scale receiving side (14) such that the displacement of the fixation pad (22) of each stand (20) does not cause any deformation of the encoder scale receiving side (14) or a minimal deformation occurring exclusively along the longitudinal direction of said encoder scale receiving side (14).

## Description

### Field of the invention

The present invention relates to a scale support for an encoder scale and to a linear encoder for a linear motor, comprising such scale support. The invention also relates to a motion-positioning system, in particular a wafer positioning system, comprising at least one linear motor comprising the linear encoder.

### Background of the invention

X-Y motion-positioning systems require high precision linear encoders to provide accurate positioning. Mounting encoder scales on a motion-positioning system therefore requires special care. Inappropriate mounting, undesired mechanical solicitations and thermally induced stresses might deform the scale and introduce measurement artifacts that will impact the machine performance. Indeed, a key performance indicator of positioning systems is repeatability. Non-repeatable deformations of the scale can lead to positioning errors.

US11,408,554 discloses a moveable metrology frame in a gantry-type positioning device. This positioning device comprises multiple encoder heads arranged to measure both the X-Y motions to allow reconstruction of accurate positioning through geometric relations. This design allows to shield the moving metrology frame, including the attached encoder scales, from deformations coming from the mass-carrying gantry-type machine.

The above positioning device has however the inconvenient to require multiple encoders as well as mechanical elements that negatively impact the eigenfrequencies and overall cost of the positioning system.

EP2233893 discloses a linear scale for displacement measurement, comprising a scale board made of low expansion ceramics, a graduation unit fixed to an upper surface of the scale board, and an attachment unit connecting the scale board to a base support. The scale board comprises slits that is formed near the attachment unit. These slits are arranged to absorb deformation due to the change in form of the scale board thereby preventing the deformation from affecting the graduation unit.

### Brief summary of the invention

An aim of the present invention is to provide a scale support for an encoder scale of a linear encoder according to an alternative solution.

Another aim of the present invention is to provide a linear motor comprising a linear encoder incorporating the scale support.

These aims are achieved notably by a scale support for an encoder scale of a linear electric motor comprising a scale receiving part having an encoder scale receiving side for receiving an encoder scale and at least two stands connected to the receiving part. Each stand comprises a fixation pad arranged to be fixed to a fixation region of a stationary part of the electric motor. The fixation pad is arranged to be subjected to a displacement induced by a displacement of said fixation region when the scale support is mounted on the stationary part and the electric motor is operating. Each stand further comprises a decoupling member for at least a partial mechanical decoupling between the fixation pad and the encoder scale receiving side such that the displacement of the fixation pad of each stand does not cause any deformation of the encoder scale receiving side or a deformation occurring exclusively along the longitudinal direction of said encoder scale receiving side.

In an embodiment, the deformation of the encoder scale receiving side corresponds to an expansion along its longitudinal direction.

In an embodiment, the decoupling member comprises at least one flexible blade extending, under unstressed mechanical conditions, along a direction perpendicular to the longitudinal axis of the scale receiving part. The flexible blade is arranged to connect the scale receiving part to the fixation pad.

In an embodiment, the fixation pad of each stand comprises a through-hole for rigidly fixing the fixation pad to the fixation region of the stationary part of the electric motor.

In an embodiment, the scale receiving part further comprises a base connected to a bottom side of the encoder scale receiving side and to which the blade is connected. The base extends along the longitudinal direction of the encoder scale receiving side in a plane orthogonal to the plane of said receiving side such that the scale support has an inverted T-shaped cross-section.

In an embodiment, the decoupling member comprises two flexible blades connecting the scale receiving part to the fixation pad.

In an embodiment, two flexible blades extend parallelly from each other under unstressed mechanical conditions.

In an embodiment, the two flexible blades, a side of the fixation pad and a part of the scale receiving part delimit together an opening of a general square, rectangular or oblong shape.

In an embodiment, the fixation pad of each stand has a shape of a cube or a rectangular prism. Each flexible blade extends within the same plane of two opposite sides of the cube or rectangular prism.

In an embodiment, the two stands are arranged at equidistance from the middle of the scale receiving part.

In an embodiment, a side of the scale receiving part, opposite the encoder scale receiving side, comprises vertical ribs.

In an embodiment, the encoder scale receiving side comprises a fixation zone situated at mid-distance between the ends of the encoder scale. The fixation zone comprises grooves for receiving glue in order to secure the encoder scale middle region to the fixation zone.

Another aspect of the invention relates to a linear electric motor comprising a stationary part, a moveable part slidably mounted on the stationary part and a linear encoder. The linear encoder comprises the scale support according to any of the above described embodiments, mounted on the stationary part, an encoder scale mounted on the encoder scale receiving side of scale support and an optical position sensor unit arranged to move along the encode scale.

### Brief description of the drawings

The invention will be better understood with the aid of the description of embodiments given by way of examples and illustrated by the figures, in which:
- Figure 1 shows a perspective view of the scale support and the encoder scale designed to be mounted on the encoder scale receiving side of the support, according to a preferred embodiment;
- Figure 2 shows a front view of the encoder scale receiving side of the scale support of Figure 1;
- Figure 3 shows a perspective view of the scale support of Figure 1 from another side;
- Figure 4 shows a front view of Figure 3;
- Figure 5 a view to a larger scale of one stand A of the scale support of Figure 3;
- Figure 6 a view to a larger scale of one stand B of the scale support of Figure 4;
- Figure 7 shows a perspective view of a wafer positioning system comprising a motion system having X and Y linear motors, wherein the stationary part of the X linear motor comprises the encoder comprising the scale support of Figure 1;
- Figure 8 shows a simulation of the wafer positioning system of Figure 7 comprising the encoder scale, when exposed to mechanical stresses occurring when the wafer positioning system is operating, with the deformation of the parts amplified two thousand times;
- Figure 9 shows a simulation of the linear encoder of Figure 8 comprising the scale support and the encoder scale;
- Figure 10 shows a simulation of the encoder scale of the linear encoder of Figure 9;
- Figures 11 shows a simulation of the wafer positioning system of Figure 7 comprising a conventional encoder scale, when exposed to mechanical stresses occurring when the wafer positioning system is operating, with the deformation of the parts amplified two thousand times;
- Figure 12 shows a simulation of the linear encoder of Figure 11 comprising the scale support and the encoder scale, and
- Figure 13 shows a simulation of the encoder scale of the linear encoder of Figure 12.

### Detailed description of several embodiments of the invention

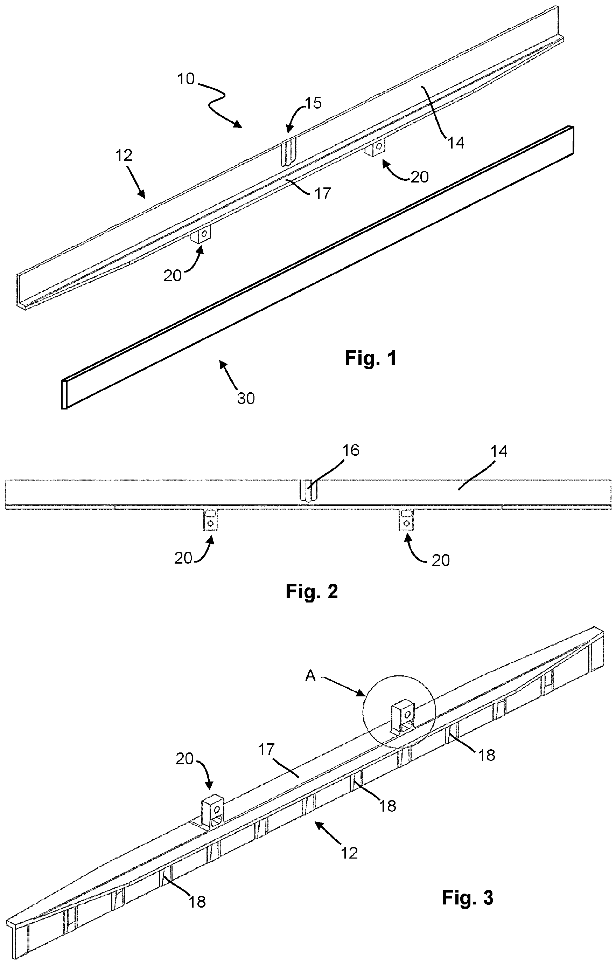

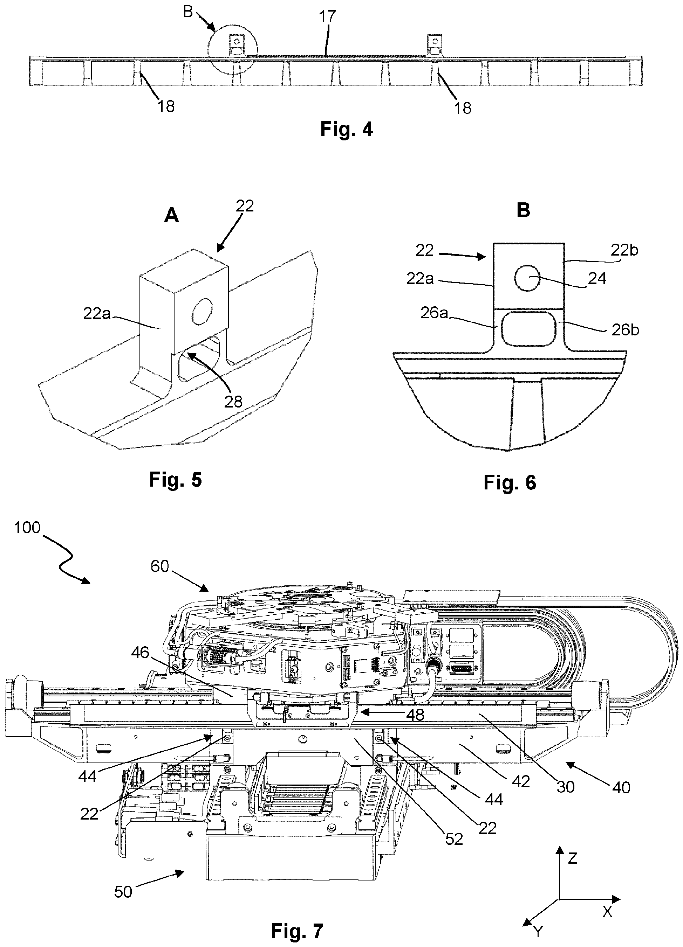

With reference to Figures 1 to 6, the scale support 10 is specifically designed to be fixed on a stationary part 42 of a X-linear electric motor 40 of a X-Y motion positioning system, in particular a wafer positioning system 100 as shown in Figure 7. The scale support 10 is configured to be fixed to fixation regions 44 of the X-linear electric motor stationary part 42 where mechanical stresses are minimal when the wafer position system 100 is operating.

The aforementioned mechanical stresses are of different natures such as the attraction forces between the magnets and the iron core of the movable part of the Y-linear electric motor, thermal stress induced by the differential thermal expansion between the rails and the magnetic track base of the motor and mechanical strain in the rails induced by non-perfect alignment between rails and sliders of respective stationary and movable parts of the motor.

With reference to Figures 1 and 2, the scale support 10 comprises a scale receiving part 12 and two stands 20 for fixing the scale receiving part 12 to the stationary part 42 of the X-linear electric motor 40. The scale receiving part 12 comprises a longitudinal encoder scale receiving side 14 for fixedly receiving an encoder scale 30. To this end, a fixation zone 15, situated at mid-distance between two opposite ends of the encoder scale receiving side 14, comprises three grooves 16 for receiving glue in order to have an encoder scale middle region glued to that fixation zone 15. One longitudinal side of the encoder scale 30 is intended to be fixed to the rest of the encoder scale receiving side 14 by a double-sided adhesive tape such as HEIDENHAIN PRECIMET^{®} elastic adhesive film. This tape is adapted to allow nevertheless a relative movement between parts of the encoder scale 30 located on both sides of its middle region and the corresponding parts of the encoder scale receiving side 14 such that the accuracy of the encoder is not affected by a longitudinal expansion of this receiving side.

With reference to Figures 3 and 4, the scale receiving part 12 of scale support 10 comprises a longitudinal side opposite the encoder scale receiving side 14 and comprising vertical ribs 18 extending from a top to a bottom side of the scale receiving part 12 and spaced apart from each other lengthwise. The two stands 20 are configured to, at least partly, mechanically decouple the receiving side 14 of the scale receiving part 12 from the fixation regions 44 of the X-linear electric motor stationary part 42 such that any displacement of these regions does not propagate to the encoder scale receiving side, or to a significant lesser extent than conventional scale supports.

The scale receiving part 12 further comprises a base 17 connected to a bottom side of the encoder scale receiving side 14 and extending therealong in a plane orthogonal to the plane of the receiving side such that the scale support 10 has an inverted T-shaped cross-section. This cross-section profile ensures sufficient stiffness against dynamic deformation while the use of vertical ribs 18 ensure the stiffness of the encoder scale receiving side 14 while minimizing the mass of the scale receiving part 12. To reduce further the mass of the scale receiving part 12, chamfers are foreseen in the four angles of the base to remove material that does not contribute significantly to the stiffness of the part.

As shown in Figure 4, the two stands 20 of the scale support 10 are connected to a bottom side of base 17 of the scale receiving part 12, preferably at equidistance from the middle point of the encoder scale receiving side 14 so as to provide a balanced thermal expansion of the scale with respect to that middle point. These two stands 20 are configured to be fixed to the fixation regions 44 of the stationary part 42 of the X-linear electric motor 40 on both sides of the movable part 52 of a Y-linear electric motor 50 as shown in Figure 7. The encoder scale 30 extends along the rails of the movable part 46 of the X-linear electric motor 40. A wafer stage 60 is mounted on the movable part 46 which comprises an optical position sensor unit 48 to position the wafer stage 60 along the X coordinate of the wafer positioning coordinate system.

In the embodiment illustrated in Figures 5 and 6, each stand 20 comprises a fixation pad 22 and two blades 26a, 26b extending, under unstressed mechanical conditions, along a direction perpendicular to the longitudinal axis of the scale receiving part 12 and parallelly from each other. These two blades 26a, 26b are connected to a bottom side of the base 17 of the scale support 10. These blades are sized to maximize eigenfrequencies while providing necessary decoupling between the encoder scale receiving side 14 and the pads 22 there are rigidly fixed to the fixation regions 44 of the X-linear electric motor stationary part 42. To this end, the fixation pad 22 of each stand 20 comprises a through-hole 24 for fixing the pad 22 to the fixation regions 44 with screws.

As particularly illustrated in Figure 5, the two flexible blades 26a, 26b, a side of the fixation pad 22 and a part of the base bottom side of each stand 20 delimit together an opening 28 of a general square, rectangular or oblong shape. Each fixation pad 22 has a shape of a cube or a rectangular prism. Each flexible blade 26a, 26b extends within the same of two opposite sides of the cube or rectangular prism. These two blades are configured to absorb, at least partly, the movements of the fixation pads 22 induced by the movements of the fixation regions 44 of the linear motor stationary part 42 when the motor is operating.

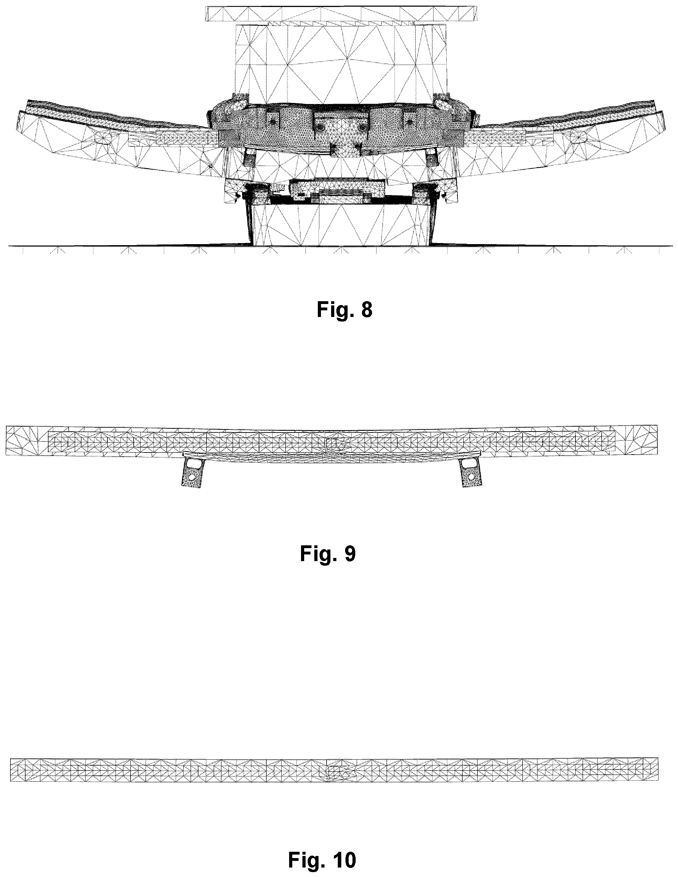

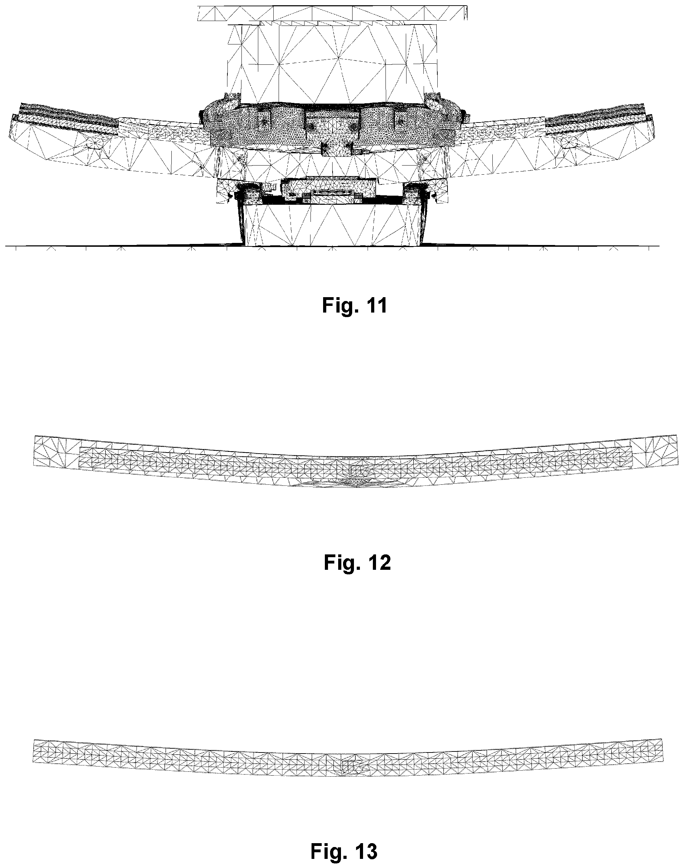

By simulation, the deformation of the proposed geometry was compared to a traditional scale support conventionally used on mechanical bearing stacked systems, which is used as the reference. The applied loads, similar for both cases, are motor thermal load, iron core motor attraction forces and gravity. Results are displayed in figures 8 to 10 for the scale support according to above-described embodiment and in figures 11 to 13 for a reference geometry of a conventional scale support.

As can be seen from Figure 9, the base 17 of the scale receiving part 12 has been slightly deformed between the two stands 20. Yet, this deformation has a minimal impact on the encoder scale receiving side 14 as illustrated in Figure 10. More particularly, the scale encoder receiving side 14 has only expanded exclusively along its longitudinal direction. This plays a crucial role as in addition to the usual incremental track with many graduation lines arranged transversely to the measuring direction, the encoder scale may also have an additional measuring structure with a few graduation lines in the measuring direction that extend over the entire measuring length which is commonly called the straightness track.

Because of the possibility of deriving small position deviations transverse to the actual measuring direction from this straightness track, such scales are also referred to as 1D+ scales. Such 1D+ scales are used to measure guidance errors and tilts and to take them into account when positioning. The deformation of the encoder scale receiving side occurring exclusively along its longitudinal direction does not affect the straightness track, thereby still allowing the possibility to correct errors. The accuracy of the encoder is therefore not impacted by external forces described above when the X-Y motion-positioning system 100 is in operation.

Conversely, the scale receiving part of a conventional scale support has undergone a much greater deformation, under the same external forces, thereby impacting the general shape of the scale receiving side as illustrated in Figures 12 and 13. The encode scale support according to the described embodiment can therefore maintain high accuracy as opposed to standard linear encoders, which are subject to a loss of precision.

Various modifications can be brought to the scale support of the above-described embodiment without departing from the scope of the appended claims. For example, the fixation pad of each stand can be mechanically decoupled from the encoder scale receiving side of the scale support by a single flexible blade extending for example from the middle of a side of the pad facing the base of the encoder scale part. In such case, the thickness of the blade would be significantly larger than the thickness of the two flexible blades of the above embodiment, for example by a twofold magnitude.

### Reference list

Scale support 10
   Scale receiving part 12
      Encoder scale receiving side 14
         Fixation zone 15
         Grooves 16
      Base 17
      Vertical ribs 18
   Stands 20
      Fixation pad 22
         Opposite sides 22a, 22b
         Through hole 24
      Decoupling member 26
         Flexible blades 26a, 26b
         Opening 28
Encoder scale 30
X-linear motor 40
   Stationary part 42
      Fixation regions 44
   Movable part 46
      Optical position sensor unit 48
Y-linear motor 50
   Movable part 52
Wafer stage 60
Wafer positioning system 100

## Claims

1. Scale support (10) for an encoder scale (30) of a linear electric motor (40), comprising a scale receiving part (12) having an encoder scale receiving side (14) for receiving an encoder scale (30), and at least two stands (20) connected to the receiving part (12), wherein each stand (20) comprises a fixation pad (22) arranged to be fixed to a fixation region (44) of a stationary part (42) of the electric motor (40), said fixation pad (44) being subjected to a displacement induced by a displacement of said fixation region (44) when the scale support (10) is mounted on said stationary part (42) and said electric motor is operating, and wherein each stand (20) further comprises a decoupling member (26a, 26b) for at least a partial mechanical decoupling between the fixation pad (22) and the encoder scale receiving side (14) such that the displacement of the fixation pad (22) of each stand (20) does not cause any deformation of the encoder scale receiving side (14) or a deformation occurring exclusively along the longitudinal direction of said encoder scale receiving side (14).

2. Scale support (10) according to claim 1, wherein said deformation corresponds to an expansion of the encoder scale receiving side (14) along said longitudinal direction.

3. Scale support (10) according to any preceding claim, wherein said decoupling member comprises at least one flexible blade (26a, 26b) extending, under unstressed mechanical conditions, along a direction perpendicular to the longitudinal axis of the scale receiving part (12), and wherein said at least one flexible blade (26a, 26b) is arranged to connect the scale receiving part (12) to the fixation pad (22).

4. Scale support (10) according to claim 1 or 2, wherein the fixation pad (22) of each stand (20) comprises a through-hole (70) for rigidly fixing said fixation pad (22) to said fixation region (44) of the stationary part (42) of the electric motor (40).

5. Scale support (10) according to any preceding claim, wherein the scale receiving part (12) further comprises a base (17) connected to a bottom side of the encoder scale receiving side (14) and extending therealong in a plane orthogonal to the plane of said receiving side (14) such that the scale support (10) has an inverted T-shaped cross-section, and wherein said at least one blade (26a, 26b) is connected to said base (17).

6. Scale support (10) according to any preceding claim, wherein said decoupling member comprises two flexible blades (26a, 26b) connecting the scale receiving part (12) to the fixation pad (22).

7. Scale support (10) according to the preceding claim, wherein said two flexible blades (26a, 26b) extend parallelly from each other under unstressed mechanical conditions.

8. Encoder scale support (10) according to the preceding claim, wherein said two flexible blades (26a, 26b), a side of the fixation pad (22) and a part of the scale receiving part (12) delimit together an opening (28) of a general square, rectangular or oblong shape.

9. Scale support (10) according to any preceding claim, wherein the fixation pad (22) of each stand (20) has a shape of a cube or a rectangular prism, and wherein each flexible blade (26a, 26b) extends within the same plane of two opposite sides (22a, 22b) of said cube or rectangular prism.

10. Scale support (10) according to any preceding claim, wherein the two stands (20) are arranged at equidistance from the middle of the scale receiving part (12).

11. Scale support (10) according to any preceding claim, wherein a side of the scale receiving part (12), opposite the encoder scale receiving side (14), comprises vertical ribs (18).

12. Scale support (10) according to any preceding claim, wherein the encoder scale receiving side (14) comprises a fixation zone (15) situated at mid-distance between the ends of the encoder scale (30) and comprising grooves (16) for receiving glue in order to secure the encoder scale middle region to said fixation zone (15).

13. A linear electric motor comprising a stationary part (42), a moveable part (46) slidably mounted on the stationary part (42) and a linear encoder comprising the scale support (10), according to any preceding claim, mounted on the stationary part, an encoder scale (30) mounted on the encoder scale receiving side (14) of scale support (10) and an optical position sensor unit (48) arranged to move along the encode scale (30).
